# EUROPEAN PATENT APPLICATION

(11) **EP 1 703 033 A2**
(43) Date of publication of application: **20.09.2006**
(21) Application number: 06075393.6
(22) Date of filing: 20.02.2006
(51) Int. Cl.: E04B 1/80, E04C 2/26

(54) **Interior building panel with PCM**

(30) Priority: 23.02.2005 EP 05075432
(71) Applicant: Corus Bausysteme GmbH, 56070 Koblenz (DE); Corus Technology BV, 1970 CA Ijmuiden (NL)
(72) Inventor: Neuwald, Jürgen, 56068 Koblenz (DE)
(74) Representative: van der Donk, Henricus Matheus

(57) **Abstract**

Interior building panel for mounting against or integrating in a ceiling or a wall of a building, the interior building panel comprising a heat accumulating material and a front panel, wherein the heat accumulating material is a phase change material, for accumulating thermal energy at a first point in time and giving off the thermal energy at a second point in time.

## Description

This invention relates to an interior building panel for mounting against or integrated in a ceiling or a wall. The invention also relates to an interior building panel for use as a divider panel comprising a first outer metal panel and a second outer metal panel enclosing an inner part. The invention further relates to a method of controlling the interior climate of a building using said interior building panel and/or divider.

Conventionally, buildings are made of masonry or stone walls. These walls, particularly when the walls are thick, such as a church wall, store heat, which may be solar heat, or cold during the day, especially during a hot day, keeping the inside of the building cool, and release the heat during cooler periods, preventing the interior of the building from cooling down. It is noted that the period extends from short time intervals, for instance daily events or even shorter time intervals such as the time interval between a sunny spell and a cloudy spell, to longer term effects such as seasonal effects.

Modem buildings methods often use lightweight metal panels, the panels often being prefabricated off-site. These panels when used as a wall or roof usually lack the heat storage capacity in comparison to thicker walls or roofs made of stone, masonry or tiles. This lack of heat storage capacity may lead to larger temperature fluctuations in the interior over time as compared to buildings made from conventional materials such as stone, concrete or bricks. These larger temperature fluctuations or temperature differences lead to an increased use of cooling during the hotter periods and heating during the cooler periods.

It is an object of the invention to provide an interior building panel for mounting against or integrating in a ceiling or a wall of a building, which provides a reduction in temperature difference between the hot period and the cool period in a building.

This object is reached by providing an interior building panel for mounting against a ceiling or a wall of a building, the interior building panel comprising a heat accumulating material and a front panel, wherein the heat accumulating material is a phase change material, for accumulating thermal energy at a first point in time and giving off (i.e. emitting) the thermal energy at a second point in time. It will be clear that the second point in time is later than the first point in time. It is noted that the heat accumulating material is also understood to be able to accumulate cold. The metal front panel is the side of the building panel, which faces the interior of the building, whereas the heat accumulating material is located between the metal front panel and the ceiling or wall of the building. The interior building panel may also be integrated in a ceiling or a wall of a building. The heat accumulation material must be in thermal contact with the interior of the building, either directly, or indirectly through thermal contact with the metal front panel which faces the interior of the building. This thermal contact may be achieved by directly attaching the heat accumulation material to the side of the metal front panel which does not face the interior of the building, or there may be an intermediary material between the heat accumulating material and the side of the metal front panel which does not face the interior of the building. This intermediary material is preferably heat conducting so as to enable the conduction of thermal energy such as heat or cold to and from the heat accumulating material to the metal front panel.

It should be noted that the front metal panel may be flat or at least substantially flat, but that it also may be profiled. Apart from a different esthetic aspect, the difference in shape has an effect on the surface of the front metal panel, which is relevant for the speed of absorption or release of heat by the panel. Preferably the metal front panel is made of steel, stainless or otherwise, such as low-alloy or unalloyed steel, or of an aluminium alloy. The metal panel may be provided with a coating system comprising metallic or organic coating layers to protect the panel an/or to give it a chosen appearance. Other appropriate coatings such as textiles or stucco may also be applied.

During the hotter period, the temperature of the air near the panel increases and the heat is absorbed by the heat-accumulating material. The panel functions as a passive element. The metal front panel has the function of retaining the heat accumulating material and of passing the heat from the interior to the heat accumulating material. The metal front panel may also have acoustical and esthetic functions. In this invention, the heat accumulating material is a phase change material. The inner part comprising the heat accumulating material is mounted between the backside outer panel and the metal front panel.

A phase change material in the context of this invention is defined to be a material that is transformable from a first phase (for instance a solid phase) into a second phase (for instance a liquid phase). During that phase transformation or phase change between the solid and liquid phase, large quantities of thermal energy at nearly constant temperature, i.e. the melting temperature or phase transition temperature, can be stored and released. A classic heat storage material, having a specific heat capacity c and a mass, m stores a heat amount Q in dependence of the temperature difference ΔT of *Q=m·c·ΔT.* Phase change materials use the specific phase-change enthalpy, i.e. the specific melting enthalpy in case of a sotid-liquid phase transition. During the phase change an addifiional heat storage of *m*·Δ*h*_{phase-change} is available, resulting in *Q=m·c·ΔT* + *m*·Δ*h*_{phase-change}. The temperature of the material does generally not change during the phase change, and hence these types of heat storage materials are sometimes referred to as latent heat storage materials. Advantageous is therefore that large quantities of thermal energy can be stored and released at a relatively constant temperature, even when limited volumes and low operating temperature differences are applicable. A known phase change material is paraffin, in which case the phase change is between the solid and liquid phase. The phase change may also be between a first solid phase and a second solid phase, for instance a glass-transition transformation in a polymeric material. By selecting a suitable phase change material, the phase transition temperature can be selected, for instance 21 °C.

By using this phase change material as a heat accumulating material the amount of heat which can be absorbed and released is very high, thereby efficiently emulating the thermal characteristics of a conventional roof made of materials such as ceramic or slate roofing tiles or of a conventional wall made of materials such as stone, concrete or masonry. A thin layer of a phase change material is already sufficient to emulate the heat storage capacity of a thick stone wall.

The heat stored in the phase change material within the interior panel during a hot period is released during a colder period thereby leveling the temperature difference between the hotter and the colder periods. The phase change in the phase change material such as from solid to liquid or solid to solid must be substantially reversible so as to enable benefiting from the thermal cycle of heat accumulation and heat release repeatedly over a sustained period of time, such as many years, so as to enable interior climate control of the building over the said sustained period of time.

The effect of absorbing heat during a hotter period and releasing heat during a colder period can also be used to increase the thermal capacity of the interior of a building, for reducing the temperature fluctuations during heating of an interior space using a central heating system. The absorption of the heat generated by the heating system is at least partly absorbed in the heat accumulating material and emitted slowly to the interior. This enables operating the heating device in an operating window wherein the heating device is more efficient in terms of the caloric value of the fuel or the electricity used in the heating system for heating the interior. By selecting the phase transition temperature, the main function of the phase change material can be selected. By selecting a phase transition temperature below the desired average temperature of the interior, for instance 15°C, the interior building panel is particularly suitable for storing cold at a first period in time (for instance during the night) and giving off (i.e. emitting) the cold at a second period in time (for instance during the day) thereby keeping the interior cool during the hotter period. By selecting a phase transition temperature around the desired average temperature of the interior, for instance 20°C, the interior building panel is particularly suitable for storing heat or cold depending on the actual temperature of the interior. By selecting a phase transition temperature above the desired average temperature of the interior, for instance 30°C, the interior building panel would be particularly suitable for cooperating with a heating system, such as a central heating system. In a preferred embodiment an interior building panel is provided for mounting against a ceiling or a wall of a building comprising a backside outer panel, an inner part comprising a heat accumulating material and a metal front panel, wherein the heat accumulating material is a phase change material. The panel is mounted with its backside outer panel facing the wall or the ceiling of the building. This backside outer panel is preferably a metal panel, preferably made of steel, stainless or otherwise, such as low-alloy or unalloyed steel, or an aluminium alloy. The metal panel may be provided with a coating system comprising metallic or organic coating layers to protect the panel and/or to give it a chosen appearance. The backside outer panel may be provided by a cured product such as gypsum or the like. Of course the panel may also be mounted against a door or form an integral part thereof.

In an embodiment of the invention, the heat accumulating material is provided in discontinuous portions of a suitable shape, for instance in the form of strips, tiles or a combination thereof. The space in between the strips may be filled with an intermediary material so as to enable the conduction of heat to and from the heat accumulating material to the metal front panel, and/or between the portions of the heat accumulating material. Preferably, the intermediary material is heat conducting. This has the effect that any temperature differences over the surface of the metal front panel are equalized more quickly. By selecting the appropriate number of strips or tiles and the distance between the strips or tiles in the interior building panel, the thermal capacity per surface area of metal front panel can be tailored to the needs of the location where the interior building panel is to be mounted. By selecting an appropriate intermediary material, the interior building panel provided with strips or tiles may emulate a building panel, which is provided with heat accumulating material over the entire surface of the metal front panel, thereby reducing costs without sacrificing comfort.

In an embodiment the heat accumulation material is provided to substantially the entire surface of the backside of the metal front panel. This way the thermal capacity of the interior building panel is maximized for a chosen thickness and sort of heat accumulating material. When a maximum thermal capacity per surface area of metal front panel is required, the entire backside of the metal front panel should be provided with heat accumulating material having the desired thermal properties.

The panel is mounted with its backside outer panel turned towards the wall or the ceiling. This embodiment, in which the phase change material is sandwiched between the metal front panel and the backside outer panel enables easy handling of the interior building panel as the phase change material is protected against damage by handling the building panel. Off-site assembly of the building panels followed by transport to the building site may also be facilitated. Again the sandwich between the metal front panel and the backside outer panel may comprise a first intermediary material so as to enable the conduction of heat to and from the heat accumulating material to the metal front panel, and/or a second intermediary material between the portions of the heat accumulating material. The first and the second intermediary materials may be of the same material. The first and/or the second intermediary material may be heat conducting.

In an embodiment of the invention the front panel is provided at least partly with holes. This embodiment allows for a quicker heat transport through the front panel to the phase change material. The holes also increase the acoustic dampening of the panel.

In an embodiment of the invention the front panel at least partly consists of a perforated metal, an expanded metal, a wire cloth or combinations thereof. These types of front panels provide a quick heat transport through the front panel to the phase change material beside being esthetically and acoustically appropriate for an interior building panel. The metal front panel may be provided with a coating system comprising metallic or organic coating layers to protect the panel an/or to give it a chosen appearance. Other appropriate coatings such as textiles may also be applied.

The phase change material may be provided in the form of a solid panel such as a sheet, optionally provided in discontinuous portions of a suitable shape, for instance in the form of strips, tiles or a combination thereof, or as a thin layer such as a foil. It may also be provided in the form of a granular compound or any other form with a large specific surface enclosed between the backside outer panel and the metal front panel. In case the granular compound is to be used in the absence of a backside outer panel, the granular compound may be provided in the form of a condensed or compacted material analogous to polystyrene foam, or the granules may be immobilized by gluing or melting together, or by immobilizing the granules in a setting compound such as gypsum, for instance to produce a gypsum plate provided with the phase change material, or the granules may need to be enclosed between sheets or in a pouch for preventing the granules to be dislocated. This pouch may be rigid or flexible, and the pouch material is preferably heat conducting. Preferably the pouch is substantially of one thickness, thereby emulating a sheet or plate of phase change material. The granules may consists entirely of phase change material, or the granules may be of a suitable material comprising the phase change material, for instance by enclosing the phase change material in a shell of a suitable material.

By employing phase changes materials with different thicknesses and/or heat capacity, the thermal capacity of an interior building panel can be adapted locally. Although the invention is described in terms of the use of the interior building panel for walls, ceilings and dividers, it will be clear that the interior building panel may also be mounted on the floor of a building or form an integrated part of the floor of the building, particularly when the floor is provided with a floor heating or cooling system.

According to a second aspect of the invention an interior building panel is provided for use as a divider panel comprising a first outer metal panel and a second outer metal panel enclosing an inner part, the inner part comprising a heat accumulating material wherein the heat accumulating material is a phase change material for accumulating thermal energy at a first point in time and giving off (i.e. emitting) the thermal energy at a second point in time. The application of a divider in a room provides a large absorbing area for absorbing and releasing heat. The first and/or second outer panels may be provided at least partly with holes and/or at least partly consists of a perforated metal, an expanded metal, a wire cloth or combinations thereof. The divider may extend from the floor to the ceiling of the building, effectively acting as a wall, or it may extend over part of the distance between the floor and the ceiling of the building, for instance as a divider between cubicles in an office building. It will be clear that the doors in such a wall may also be produced according to the invention.

The phase change material in between the first and the second outer metal panels may be provided in the form of a solid panel such as a sheet, or thin layer such as a foil. It may also be provided in the form of a granular compound or any other form with a large specific surface enclosed between the backside outer panel and the metal front panel.

According to a third aspect of the invention, a method is provided of controlling the internal climate of a building using an interior building panel and/or a divider as described above wherein thermal energy or heat which is accumulated in the heat accumulating material at a first point in time is released, i.e. emitted, at a second point in time, thereby leveling the temperature differences or variations over time. It is noted that thermal energy in this context also includes storage of cold at a first point in time and emission thereof at a second point in time.

The invention is also embodied in the use of a building panel according to the invention in or onto a floor, in or onto a wall or in or onto a ceiling in the interior of a building, wherein in a floor, in a wall and in a ceiling is to be understood as forming an integral part of the floor, wall or ceiling.

It should be noted that the application of the embodiments according to the invention are not limited to buildings made using light-weight metal panels. The embodiments according to the invention can equally well be applied in buildings made from conventional materials, or for example in buildings using a large amount of glass as a structural material such as greenhouses, conservatories, sun lounges, orangeries or modem houses or office blocks.

It is of course to be understood that the present invention is not in any way limited to the described embodiments and examples described above, but encompasses any and all embodiments within the scope of the description and the following claims.

## Claims

1. interior building panel for mounting against or integrating in a ceiling or a wall of a building, the interior building panel comprising a heat accumulating material and a front panel, wherein the heat accumulating material is a phase change material, for accumulating thermal energy at a first point in time and releasing the thermal energy at a second point in time.

2. Building panel according to claim 1, wherein the front panel is a metal panel,

3. Building panel according to claim 1 and 2, comprising a backside outer panel, an inner part comprising a heat accumulating material and a metal front panel, wherein the heat accumulating material is a phase change material.

4. Building panel according to any one of claims 1 to 3, wherein the front panel is provided at least partly with holes.

5. Building panel according to claim 4, wherein the front panel at least partly consists of a perforated metal, an expanded metal, a wire cloth or combinations thereof.

6. Building panel according to any one of the preceding claims wherein the phase change material is provided in the form of strips and/or tiles, and wherein each strip is provided at a distance from another strip.

7. interior building panel for use as a divider panel comprising a first outer metal panel and a second outer metal panel enclosing an inner part, the inner part comprising a heat accumulating material wherein the heat accumulating material is a phase change material for accumulating thermal energy at a first point in time and giving off the thermal energy at a second point in time.

8. Use of a building panel according to any one claim 1 to 7 in or onto a floor, in or onto a wall or in or onto a ceiling in the interior of a building.

9. Method of controlling the internal climate of a building using an interior building panel and/or a divider according to claim 1 to 7 wherein thermal energy which is accumulated in the heat accumulating material at a first point in time is released at a second point in time, thereby leveling the temperature differences or variations over time.
